# EUROPÄISCHE PATENTSCHRIFT

(11) **EP 0 976 972 B1**
(45) Veröffentlichungstag und Bekanntmachung des Hinweises auf die Patenterteilung: **29.09.2004**
(21) Anmeldenummer: 99107613.4
(22) Anmeldetag: 16.04.1999
(51) Int. Cl.: F21V 8/00

(54) **Drehknopf eines Steuergerätes**
Rotary knob for control apparatus
Bouton tournant pour dispositif de commande

(30) Priorität: 30.07.1998 DE 19834374
(43) Veröffentlichungstag der Anmeldung: 02.02.2000
(73) Patentinhaber: Preh GmbH, 97616 Bad Neustadt a.d. Saale (DE)
(72) Erfinder: Glienicke, Haiko, 97616 Salz (DE)
(74) Vertreter: Dietrich, Barbara

(56) Entgegenhaltungen:
- DE-A- 3 704 469
- US-A- 4 079 242
- US-A- 5 093 764

## Beschreibung

Die Erfindung betrifft einen Drehknopf eines Steuergerätes nach dem Oberbegriff des Anspruchs 1.

Eine solche Einrichtung ist beispielsweise in der DE 35 35 881 C2 bekannt und weist dort eine Beleuchtungseinrichtung auf, die durch mehrere Lichtleiter gebildet ist und die Stellung eines Drehknopfes durch entsprechende Ausleuchtung einer Skala anzeigt.
Ein gattungsgemäßer Drehknopf ist aus der US 5,093, 764 bekannt. Dieser weist eine Beleuchtungseinrichtung auf, die aus einer Lichtquelle und zwei Lichtleitkörpern besteht. Die Lichtquelle ist dabei außermittig der Drehmitte des Drehknopfes angeordnet.

Diese Einrichtung ist insbesondere für den Einsatz in Kraftfahrzeuge gedacht. Durch Verdrehen der Lichtleiter tritt bei der Verstellung des Drehknopfs jedoch ein Lichtverlust auf, die Beleuchtungseinrichtung ist sehr kompliziert aufgebaut.

Aus der nicht vorveröffentlichten DE 197 12 294 A1 ist bereits eine Anordnung eines drehbären Betätigungsknopfes entnehmbar, der einen Lichtleitkörper aufweist, in dessen Drehmitte eine Lichteintrittsfläche ausgebildet ist, vor der eine Lichtquelle angeordnet ist, wobei der Lichtleitkörper mit seinem Umfangteil in einem transparenten Gehäuseteil endet, das eine von außen sichtbare Skala aufweist. Zwischen Umfangsteil des Lichtleitkörpers des Drehknopfes und der Skala besteht ein gehäusefester Lichtleitkörper, der in seinem Lichtgang eine Totalreflexionsfläche aufweist, in der die Lichtstrahlen umgelenkt werden.

Es hat sich jedoch gezeigt, daß auch bei dieser Anordnung nur eine schwache Ausleuchtung der Skala erreicht wird.

Es ist daher Aufgabe der Erfindung, einen Drehknopf der gattungsgemäßen Art so auszubilden, daß eine verbesserte Skalaausleuchtung und darüber hinaus eine verbesserte, d. h. vereinfachte Ausführung für eine Serienfertigung erreicht werden.

Diese Aufgabe ist durch die im Kennzeichen des Patentanspruchs 1 genannten Merkmale gelöst, vorteilhafte Weiterbildungen sind in den Unteransprüchen angegeben.

Ein Ausführungsbeispiel der Erfindung ist in der Zeichnung dargestellt und wird nachfolgend beschrieben.

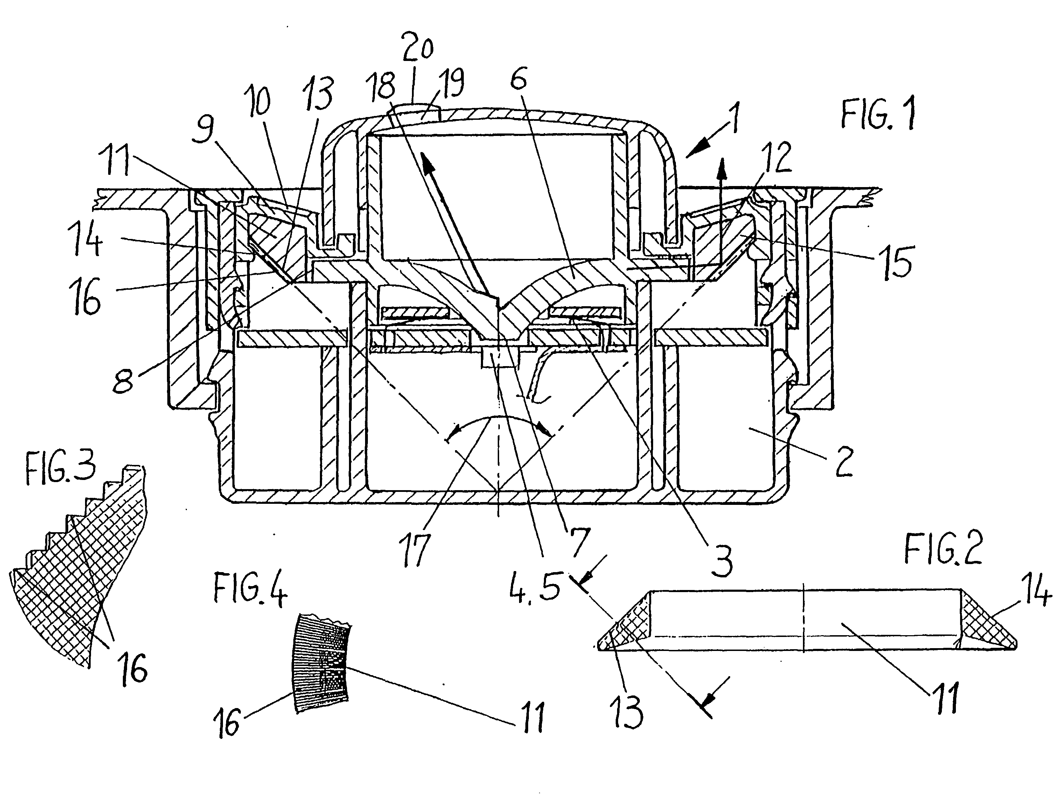

Die Zeichnung zeigt:
Fig. 1
   einen Schnitt durch einen erfindungsgemäßen Drehknopf,
Fig. 2 und 3
   eine Einzelheit aus Fig. 1 in Schnittdarstellung,
Fig. 4
   eine Ansicht aus Fig. 2 und 3.

Fig. 1 zeigt einen Schnitt durch einen erfindungsgemäßen Drehknopf 1 eines Steuergerätes 2 mit elektrischen/elektronischen Bauteilen 3 und einer Beleuchtungseinrichtung 4, die aus einer Lichtquelle 5 vor einem im Drehknopf 1 befindlichen ersten Lichtleitkörper 6 mit einer in der Drehmitte angeordneten Lichteintrittsfläche 7 gebildet ist, wobei der erste Lichtleitkörper 6 mit seinem Umfangsteil 8 in einem transparenten Gehäuseteil 9 endet, das eine von außen sichtbare Skala 10 und einen gehäusefesten, zwischen Skala 10 und Umfangsteil 8 des Lichtleitkörpers 6 des Drehknopfes 1 angeordneten zweiten Lichtleitkörper 11 aufweist, der in seinem Lichtgang 12 (Pfeil) eine Totalreflexionsfläche 13 aufweist.

Bei diesem Drehknopf 1 ist nun vorgesehen, daß die Totalreflexionsfläche 13 mit ihrer außenliegenden Seite 14 einen Mantel eines Kegel- oder Kalottenstumpfes 15 bildet, auf dem segmentförmig 90° Prismen 16 angeordnet sind, d. h. die Prismen 16 weisen mit ihrer Längsmitte auf den Drehpunkt des Drehknopfes 1 hin.

Aus Fig. 2 ist ersichtlich, daß der zweite Lichtleitkörper 11 als Ring mit einer Dreiecksquerschnittsfläche ausgeführt ist.

Aus einem Schnitt durch die Dreiecksquerschnittsfläche, wie in Fig. 3 dargestellt, sind die 90°-Prismen erkennbar. Fig. 4 zeigt eine Draufsicht auf den Ring, aus der ebenfals die segmentförmigen 90°-Prismen der außenliegenden Seite 14 erkennbar sind.

Es ist vorteilhaft, wenn die Zuordnung der Reflexionsfläche 13 zur Skalaebene so erfolgt, daß der Kegel- oder Kalottenstumpf 15 zum Beispiel innerhalb eines 90° Winkels 17 liegt, wie in Fig. 2 dargestellt ist, oder so abgestimmt ist, daß sich ein bestimmter Lichtaustrittsstrahl aus dem zweiten Lichtleitkörper 11 ergibt.

Zur Vereinfachung des Aufbaus und Verbesserung der Bedienbarkeit des Drehknopfes 1 wird vorgeschlagen, daß der erste Lichtleitkörper 6 des Drehknopfes 1 einen Lichtaustrittsbereich 18 aufweist, der einen Lichtaustrittsstrahl (Pfeil) in Richtung auf einen lichtdurchlässigen Bereich 19 mit einer Zeigermarkierung 20 im Drehknopf 1 bewirkt, wie aus Fig. 1 sichtlich ist.

Zur Vermeidung von durch Aufbauten am Drehknopf bewirkten Schattenbildungen können die beiden Lichtleitkörper 6, 11 lichtstreuende Partikel enthalten. Hierfür bietet sich eine Herstellung der beiden Lichtleitkörper 6, 11 aus dem Werkstoff Plexi df der Firma Röhm an.

Hierdurch ist eine sehr gute Ablesbarkeit der Stellung des Drehknopfes 1 in bezug auf nicht extra dargestellte Symbole der gehäusefesten Skala 10 erreichbar geworden.

Die erfindungsgemäße Ausbildung des Drehknopfes 1 und seine Beleuchtungseinrichtung 4 ermöglichen den Einsatz des Drehknopfes 1 bei Steuergeräten 2, die als Bedienteile für Radios, Klimaanlagen usw. in Kraftfahrzeuge eingesetzt werden.

## Patentansprüche

1. Drehknopf (1) für ein Steuergerät mit elektrischen/elektronischen Bauteilen (3) und einer Beleuchtungseinrichtung (4), die aus einer Lichtquelle (5) gebildet ist, die im montierten Zustand vor einem im Drehknopf (1) befindlichen ersten Lichtleitkörper (6) mit einer Lichteintrittsfläche (7) angeordnet ist, wobei der erste, Lichtleitkörper (6) mit seinem Umfangsteil (8) in einem transparenten Gehäuseteil (9) des Drehknopfes endet, das eine von außen sichtbare Skala (10) und einen gehäusefesten, zwischen Skala (10) und Umfangsteil (8) des ersten Lichtleitkörpers (6) des Drehknopfes (1) angeordneten zweiten Lichtleitkörpers (11) aufweist, **dadurch gekennzeichnet, daß**
- die Lichteintrittsfläche (7) des ersten Lichtleitkörpers (6) in der Drehmitte des Drehknopfes angeordnet ist,
- der zweite Lichtleiterkörper (11) in seinem Lichtgang eine Totalreflexionsfläche (13) aufweist, wobei
- die Totalreflexionsfläche (13) mit ihrer außenliegenden Seite (14) einen Mantel eines Kegel- oder Kalottenstumpfes (15) bildet, auf dem segmentförmig 90° Prismen (16) angeordnet sind.

2. Drehknopf nach Anspruch 1, **dadurch gekennzeichnet, daß** der Kegel- oder Kalottenstumpf (15) innerhalb eines in bezug auf einen vorgegebenen Lichtaustrittsstrahl aus dem zweiten Lichtleitkörper (11) abgestimmten Winkels (17) liegt.

3. Drehknopf nach Anspruch 1 oder 2, **dadurch gekennzeichnet, daß** der erste Lichtleitkörper (6) des Drehknopfes (1) einen Lichtaustrittsbereich (18) aufweist, der einen Lichtaustrittsstrahl (Pfeil) in Richtung auf einen lichtdurchlässigen Bereich (19) mit einer Zeigermarkierung (20) im Drehknopf (1) bewirkt.

4. Drehknopf nach einem der vorstehenden Ansprüche, **dadurch gekennzeichnet, daß** beide Lichtleitkörper (6, 11) lichtstreuende Partikel enthalten.

## Claims

1. Rotary knob (1) for a control apparatus having electric/electronic components (3) and an illuminating device (4), which is formed from a light source (5) which, in the installed state, is arranged in front of a first light-conducting element (6) which is located in the rotary knob (1) and has a light entry surface (7), the first light-conducting element (6) ending with its circumferential part (8) in a transparent housing part (9) of the rotary knob, which part has a scale (10) which is visible from outside and a second light-conducting element (11) which is fixed to the housing and is arranged between the scale (10) and the circumferential part (8) of the first light-conducting element (6) of the rotary knob (1), **characterized in that**
- the light entry surface (7) of the first light-conducting element (6) is arranged in the rotary centre of the rotary knob,
- the second light-conducting element (11) has a total reflection surface (13) in its light path,
- the total reflection surface (13) forms with its outer side (14) an envelope of a truncated cone or dome (15), on which 90° prisms (16) are arranged in the manner of segments.

2. Rotary knob according to Claim 1, **characterized in that** the truncated cone or dome (15) lies within an angle (17) coordinated with a predefined light exit beam from the second light-conducting element (11).

3. Rotary knob according to Claim 1 or 2, **characterized in that** the first light-conducting element (6) of the rotary knob (1) has a light exit region (18) which effects a light exit beam (arrow) in the direction of a translucent region (19) having a pointer marking (20) in the rotary knob (1).

4. Rotary knob according to one of the preceding claims, **characterized in that** both the light-conducting elements (6, 11) contain light-scattering particles.

## Revendications

1. Bouton rotatif (1) pour appareil de commande avec des composants (3) électriques/électroniques et un dispositif d'éclairage (4), qui est formé par une source lumineuse (5) qui, à l'état monté, est agencée devant un premier corps de guidage de lumière (6), disposé dans le bouton rotatif (1) et muni d'une surface d'entrée de la lumière (7), le premier corps de guidage de lumière (6) se terminant avec sa partie de contour (8) dans une partie de boîtier transparente (9) du bouton rotatif (1), laquelle comporte une graduation (10) visible de l'extérieur et un deuxième corps de guidage de lumière (11), fixe contre le boîtier et agencé entre la graduation (10) et la partie de contour (8) du premier corps de guidage de lumière (6) du bouton rotatif (1), **caractérisé en ce que**
- la surface d'entrée de la lumière (7) du premier corps de guidage de lumière (6) est agencée au centre du bouton rotatif (1),
- le deuxième corps de guidage de lumière (11) comporte une zone de réflexion totale (13) dans la trajectoire de ses rayons lumineux,
- la surface de réflexion totale (13) formant avec sa face (14) extérieure une paroi latérale d'un cône tronqué ou d'une calotte tronconique (15), sur laquelle sont disposés des prismes (16) en forme de segments à 90°.

2. Bouton rotatif selon la revendication 1, **caractérisé en ce que** le cône tronqué ou la calotte tronconique (15) est disposé à l'intérieur d'un angle (17) ajusté par rapport à un rayonnement de lumière prédéfini sortant du deuxième corps de guidage de lumière (11).

3. Bouton rotatif selon la revendication 1 ou 2, **caractérisé en ce que** le premier corps de guidage de lumière (6) du bouton rotatif (1) comporte une zone de sortie de la lumière (18), qui génère un rayonnement de lumière (flèche) en direction d'une zone (19) translucide munie d'un repère à aiguille (20) dans le bouton rotatif (1).

4. Bouton rotatif selon l'une quelconque des revendications précédentes, **caractérisé en ce que** les deux corps de guidage de lumière (6, 11) contiennent des particules de dispersion de la lumière.
